# EUROPÄISCHE PATENTSCHRIFT

(11) **EP 0 847 916 B1**
(45) Veröffentlichungstag und Bekanntmachung des Hinweises auf die Patenterteilung: **19.05.2004**
(21) Anmeldenummer: 97117213.5
(22) Anmeldetag: 04.10.1997
(51) Int. Cl.: B64C 1/10

(54) **Flugzeugrumpf mit heckseitigem Druckspant**
Aircraft fuselage with rear pressure bulkhead
Fuselage d'aéronef avec cloison étanche

(30) Priorität: 14.12.1996 DE 19652172
(43) Veröffentlichungstag der Anmeldung: 17.06.1998
(73) Patentinhaber: Airbus Deutschland GmbH, 21129 Hamburg (DE)
(72) Erfinder: Hauschildt, Michael, Dipl.-Ing., 21635 Jork (DE); Reimers, Hans-Detlef, Dipl.-Ing., 21614 Buxtehude (DE)
(74) Vertreter: Hansmann, Dierk, Dipl.-Ing.

(56) Entgegenhaltungen:
- EP-A- 0 387 400
- DE-C- 19 503 939
- US-A- 4 023 700
- US-A- 4 313 545

## Beschreibung

Die Erfindung bezieht sich auf einen Flugzeugrumpf mit Druckspant nach dem oberbegriff des Hauptanspruchs.

Ein derartiger Druckspant dient zum heckseitigen Abschluß des druckbelüfteten Bereiches des Flugzeugrumpfes und umfaßt alle Strukturelemente, die zum druckdichten. Verchließen des betreffenden Rumpfbereiches und zur Weiterleitung der aus dem Innendruck resultierenden Kräfte in die Rumpfschalenstruktur erforderlich sind. Zur Realisierung eines solchen Druckspants kommen im Prinzip zwei Lösungsansätze in Betracht. So kann der Druckspant entweder als gewölbte, ausgesteifte Membranstruktur (Kalotte) oder als ebene, behäutete Roststruktur ausgebildet sein. Maßgebend für die Wahl der einen oder der anderen Lösungsart sind die jeweils geltenden Randbedingungen, wie beispielsweise vorhandener Platz, Größe des abzuschließenden Querschnitts und dergleichen. Eine druckbeaufschlagte Membranstruktur trägt die Belastung nur in ihrer Ebene als Meridian- und Umfangskräfte ab. Endet die Membranstruktur, müssen die Meridiankräfte von den umgebenden Strukturen aufgenommen werden. Bei den Umfangskräften handelt es sich dagegen um innere Kräfte der Kalotte. Hierbei haben die Meridiankräfte der Membranstrukturen an der Übergangsstelle zum Rumpf eine nach außen gerichtete Komponente, die durch einen Ringspant aufgefangen werden muß, der dadurch in seiner Umfangsrichtung auf Druck beansprucht wird. Dieser Ringspant hat zugleich die Aufgabe, den unter Umständen vom Kreis abweichenden Rumpfquerschnitt und die Membranstruktur miteinander zu verbinden. Bekannte Ausführungen von Ringspanten in Metallbauweise haben in der Regel einen modifizierten I-Querschnitt. Dabei ergibt sich die Bedeutung des Ringspants aus seinem Gewichts- und Fertigungsaufwand. Der Gewichtsanteil des Ringspants beträgt etwa 40% des gesamten Druckspants. Die Membranstruktur hat demgegenüber nur einen Gewichtsanteil von etwa 32%. Zudem ist die Herstellung beispielsweise durch segmentierte Frästeile aus Aluminium oder sogar aus Titan recht aufwendig. Die für Blechkonstruktionen typische aufgelöste Bauweise erfordert darüber hinaus eine Vernietung des Ringspants mit der Membranstruktur.

Den realisierten Ausführungen von Druckspanten in Form gewölbter Membranstrukturen ist die Problematik eines dauerfestigkeitsgerechten Anschlusses an die Rumpfschalenstruktur sowie die Problematik des Korrosionsverhaltens gemeinsam. Der vorhandene Steifigkeitsübergang von der ungestörten Rumpfschalenstruktur zur Struktur mit Druckspant ist bei entsprechender Innendruckbelastung kritisch bezüglich einer ausreichenden Dauerfestigkeit. Ebenfalls kritisch ist bei herkömmlichen Lösungen das Korrosionsverhalten. Insbesondere im unteren Bereich des relevanten Querschnitts sammeln sich korrosionsfördernde Medien, die trotz Drainagelöchern immer wieder zu Korrosionsschäden an der Rumpfschalenstruktur und am Druckspant selbst führen können. Erschwerend kommt hinzu, daß der betroffene Bereich in der Regel schlecht inspizierbar ist.

Die DE 38 44 080 C2 zeigt eine Druckwand für einen Rumpf eines Verkehrsflugzeuges zum druckdichten axialen Abschluss eines unter Innendruck setzbaren Rumpfbereiches, wobei die aus dem Innendruck resultierenden Kräfte in die Rumpfstruktur eingeleitet werden, gekennzeichnet durch einen zweiteiligen Aufbau in der Weise, dass zur Aufnahme der Druckkräfte ein aus Zugelementen gebildetes Netzwerk und zur Sicherstellung der Druckdichtigkeit eine biegungsweiche Membran vorgesehen ist. Auch hierbei werden die aus dem Netzwerk resultierenden Kräfte in Form von Zug- bzw. Druckspannungen in die Rumpfhaut eingeleitet. Anregungen, insbesondere zur Steigerung der Dauerfestigkeit eines Druckspants für einen Flugzeugrumpf, sind dieser Druckschrift nicht zu entnehmen.

Außerdem zeigt die EP-A- 0 387 400 einen Flugzeugdruckspant aus Faserverbundwerkstoff, der mit einer Kalotte realisiert ist. Der Randbereich der Kalotte ist als Ringspant ausgebildet, welcher an einer Rumpfschale der Flugzeug-Rumpfstruktur des Rumpfhecks mit einem umlaufenden Kontaktbereich anliegt. Die Wandstärke des Randbereiches des Ringspants ist (mit einem Blick auf die Figur 3 jener Druckschrift) im Vergleich mit der Wandstärke des verbleibenden Wandbereichs der Kalotte eine deutlich größere. Anregungen oder Hinweise, die auf Maßnahmen zur Verbesserung der Dauerfestigkeit und der Inspizierbarkeit jenes Druckspantes gerichtet werden, wird man dieser Druckschrift nicht entnehmen können.

Demgemäss liegt der Erfindung die Aufgabe zugrunde, einen Flugzeugrumpf mit heckseitigem Druckspant derart auszubilden, dass dieser hinsichtlich der Dauerfestigkeit und seiner Inspizierbarkeit wesentlich verbesserte Eigenschaften zeigt.

Diese Aufgabe wird durch die im Patentanspruch 1 angegebenen Maßnahmen gelöst.

In den weiteren Ansprüchen werden zweckmäßige Ausgestaltungen dieser Maßnahmen angegeben.

Die Erfindung ist anhand der Zeichnung dargestellt und nachfolgend näher erläutert. Es zeigen
- Fig. 1: eine Übersicht über einen Druckspant,
- Fig. 2: die Ansicht II nach Fig.1,
- Fig. 3: einen Druckspant von nicht kreisförmiger Gestalt,
- Fig. 4: die Einzelheit IV nach Fig.1 und
- Fig. 5: eine Darstellung des Momentenverlaufs an einem Druckspant.

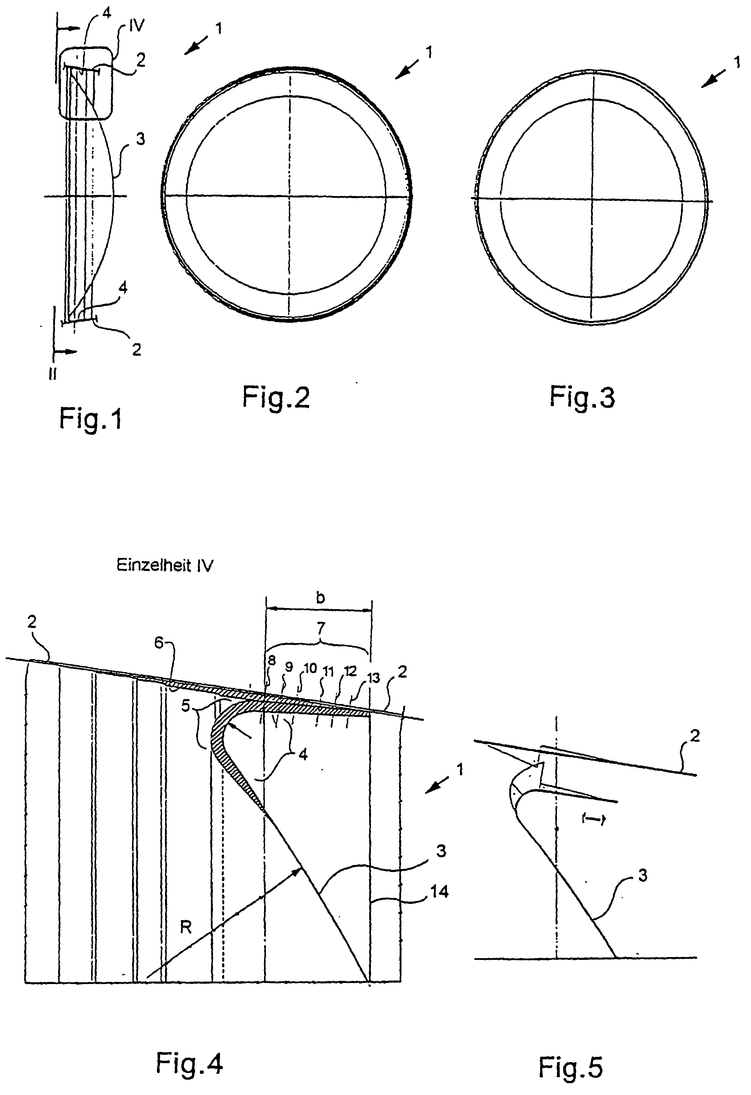

Figur 1 zeigt in einer Schnittdarstellung eine Übersicht über einen Druckspant 1, im Bereich einer Rumpfstruktur 2, wobei der Druckspant, wie die Rumpfstruktur, rotationssymmetrisch ausgebildet ist und der Schnitt axial geführt ist. Der Druckspant weist als druckaufnehmendes Element eine gewölbte Membran in Form einer Kalotte 3 auf, die mit einem Ringspant 4 integriert ist. Beide Elemente 3,4 sind aus Faserverbundwerkstoff hergestellt. Hierdurch kann der Druckspant auf einfache Weise einteilig hergestellt werden. Infolge der einteiligen Bauweise entfällt die bisher übliche Ausbildung des Ringspants als separates Bauteil. Dadurch wird die Möglichkeit eröffnet, die Kalotte 3 mit dem Ringspant 4 so auszubilden, daß die aus dem Innendruck des Rumpfes resultierenden Kräfte der Kalotte 3 innerhalb des Ringspants 4 so abgefangen werden, daß nur noch relativ niedrige Lasten in die Rumpfstruktur 2 eingeleitet werden.

Figur 2 zeigt die Ansicht II des Druckspants 1 nach Fig. 1, woraus die kreisrunde Form des Druckspants 1 hervorgeht. In diesem relativ einfachen Fall kann der Druckspant als Rotationskörper ausgebildet werden.

Figur 3 zeigt eine entsprechende Darstellung eines Druckspants von nichtkreisrunder, beispielsweise ovaler oder elliptischer Gestalt. Derartige Lösungen sind notwendig, wenn der Querschnitt der Rumpfstruktur 2 eine entsprechende Geometrie aufweist.

Die Figuren 4 und 5 zeigen die Einzelheit IV nach Fig. 1 sowie den Verlauf der Biegespannungen im Bereich des Ringspants 4. Der dargestellte Bereich umfaßt den Druckspant 1, die Rumpfstruktur 2, die Kalotte 3 und den Ringspant 4. Dabei ist vorgesehen, daß der Ringspant 4 in der Weise durch den Rand der Kalotte 3 gebildet wird, daß der Rand mit einem Übergangsbereich 5 mit dem inneren Krümmungsradius r in einem spitzen Winkel so zum Rumpfheck hin umgestülpt ist, daß er von innen an der Rumpfstruktur 2 in einem umlaufenden Kontaktbereich von der Breite b anliegt. Der Ringspant 4 wird somit durch einen Randbereich der Kalotte 3 von annähernd v-förmigem Querschnitt gebildet, der einteilig mit der Kalotte 3 verbunden ist. Zur Aufnahme der am Ringspant angreifenden Ring- und Meridiankräfte weist dieser im Vergleich mit der Kalotte 3 eine deutlich größere Wandstärke auf. Bei diesem Druckspant 1 werden die infolge des Innendrucks auf die Kalotte 3 einwirkenden Kräfte über Biegespannungen in die Rumpfschalenstruktur eingeleitet. Hierdurch wird letztlich die sehr einfache Ausbildung des Druckspants mit dem integrierten Ringspant ermöglicht, was sich sehr vorteilhaft auf die betreffenden Herstellkosten auswirkt. Um die Biegespannungen in der Rumpfschale zu beherrschen, wird die Rumpfschale im Anschlußbereich des Ringspants 4 durch einen angepaßt aufgedickten umlaufenden Doppler 6 verstärkt, der ebenfalls aus faserverstärktem Kunststoff besteht. Zur Einleitung der Kräfte vom Ringspant 4 in den Doppler 6 und damit in die Rumpfstruktur 2 dient eine Nietverbindung 7, gebildet durch Nietreihen 8 bis 13. Strukturseitig endet der Ringspant 4 mit der Kante 14. Die Verwendung vom faserverstärktem Kunststoff, insbesondere auf der Basis von Kohlenstoffasern, bietet im Vergleich mit Aluminium den Vorteil, daß die betreffenden Bauteile sehr gute Dauerfestigkeitswerte bei deutlich niedrigerem Baugewicht aufweisen.

Figur 5 zeigt den Momentenverlauf, der sich im Randbereich des Druckspants ergibt, wenn im Innenraum des Rumpfes ein Überdruck herrscht. Obwohl das hier zu betrachtende statische Problem des Druckspants an sich dreidimensional ist, erfolgt aufgrund der Schnittdarstellung nach Fig.4 vereinfachend eine zweidimensionale Betrachtung, wobei die Ringkräfte vernachlässigt werden. Innerhalb der Fläche der Kalotte 3 wirken nur Zugkräfte, die am kalottenseitigen Ende des Übergangsbereiches 5 angreifen. Hierdurch baut sich am Übergangsbereich 5 ein Biegemoment auf, das bis zur ersten Nietreihe 8 der Nietverbindung 7 auf seinen Maximalwert Mbᵣ₁ ansteigt. Über die Nietverbindung 7 wird das Biegemoment Mbᵣ₁ in den Doppler 6 und in die Rumpfstruktur 2 eingeleitet. Hierdurch springt das Moment innerhalb des Ringspants an der Nietreihe 7 auf den deutlich niedrigeren Wert Mbᵣ₂ und fällt von hier bis zur Kante 14 auf Null ab. Über die Nietverbindung 7 wird ein Biegemoment in den Doppler 6 eingeleitet, so daß auch hier Biegespannungen entstehen.

Aufgrund unterschiedlicher Orientierungen der Fasern sind verschiedene Ausgestaltungen der Erfindung denkbar. So besteht eine Ausgestaltung der Erfindung darin, daß alle Einzelkomponenten des Druckspants eine gleichmäßige oder annähernd gleichmäßige Faserorientierung aufweisen. Hierdurch wird erreicht, daß die Komponenten ein isotropes oder annähernd isotropes Festigkeitsverhalten zeigen.

Eine andere Ausgestaltung der Erfindung besteht darin, daß die Einzelkomponenten eine ungleichmäßige Faserorientierung aufweisen. Hierbei ist die Tragfähigkeit - das entspricht der Lage und Richtung der Fasern - den örtlich herrschenden Beanspruchungen angepaßt.

Es kann vorteilhaft sein, die Faserrichtung so zu wählen, daß anstelle statischer Vorteile vorwiegend fertigungstechnische erzielt werden. Hierdurch ergibt sich ein Druckspant, der zwar nicht ganz das geringe Gewicht der statisch optimalen Lösung aufweist, dafür aber mit niedrigerem Aufwand herstellbar ist. Auch gemäß diesem Prinzip ausgebildete Druckspante weisen aufgrund der fertigungstechnischen Gegebenheiten in der Regel eine ungleichmäßige Faserorientierung auf.

## Patentansprüche

1. **Flugzeugrumpf mit heckseitigem Druckspant** zum rumpfheckseitigen Abschluss eines druckbelüfteten Bereiches an einer inneren Rumpfstruktur (2) des Flugzeugrumpfes, der mit einer Kalotte (3) realisiert ist, deren Randbereich als Ringspant (4) ausgebildet ist, wobei der Randbereich einen Übergangsbereich (5) aufweist, der an einer Rumpfschale der Rumpfstruktur (2) eines Rumpfhecks mit einem umlaufenden Kontaktbereich anliegt, und die Wandstärke des Randbereiches des Ringspantes (4) im Vergleich mit der Wandstärke des verbleibenden Wandbereiches der Kalotte (3) eine deutlich größere ist, **dadurch gekennzeichnet, dass** der Randbereich der Kalotte (3) zum Rumpfheck des Flugzeugrumpfes gerichtet umgestülpt ist.

2. **Flugzeugrumpf** nach Anspruch 1, **dadurch gekennzeichnet, dass** der als Ringspant 4 ausgebildete Randbereich mit einem Doppler (6), welcher im Anschlussbereich des Ringspantes (4) der inneren Rumpfstruktur des Flugzeugrumpfes verstärkt und ihrer Form angepasst aufgedickt umlaufend ist, und der inneren Rumpfstruktur (2) vernietet ist.

3. **Druckspant** nach Anspruch 1, **dadurch gekennzeichnet, dass** die Kalotte (3) einschließlich ihrem umgestülpten ringspantausgebildeten Randbereich aus einem Faserverbundwerkstoff mit unterschiedlichen Orientierungen der Fasern hergestellt ist, wobei die Faserorientierung gleichmäßig oder annähernd gleichmäßig oder ungleichmäßig ausgebildet ist.

## Claims

1. Aircraft fuselage with rear-side pressure frame for closing the fuselage rear side of a pressurized area on an inner fuselage structure (2) of the aircraft fuselage, which frame is realized by a calotte (3), the edge area of which is formed as an annular frame (4), the edge area having a transition area (5), which is adjacent to a fuselage shell of the fuselage structure (2) of a fuselage rear with a circumferential contact area, and the wall thickness of the edge area of the annular frame (4) being much greater compared with the wall thickness of the remaining wall area of the calotte (3), **characterized in that** the edge area of the calotte (3) is turned up in the direction of the fuselage rear of the aircraft fuselage.

2. Aircraft fuselage according to claim 1, **characterized in that** the edge area formed as an annular frame 4 is riveted to a doubler (6), which in the area of connection of the annular frame (4) reinforces the inner fuselage structure of the aircraft fuselage and runs circumferentially thickened and matched to its shape, and to the inner fuselage structure (2).

3. Pressure frame according to claim 1, **characterized in that** the calotte (3) including its turned-up edge area formed as an annular frame is manufactured from a fibre reinforced material with different orientations of the fibres, the fibre orientation being formed uniformly or approximately uniformly or non-uniformly.

## Revendications

1. **Fuselage d'aéronef avec cloison étanche** pour fermer, du côté de l'extrémité arrière du fuselage, un segment soumis à une pression d'air comprimé et situé contre une structure de fuselage interne (2) d'un aéronef, réalisé avec une calotte (3) dont la zone marginale a été conçue sous la forme d'une membrure circulaire (4), ladite zone marginale présentant une zone de transition (5) attenant à une coque de fuselage de la structure de fuselage (2) d'une coque de fuselage à zone de contact périphérique, l'épaisseur de paroi de la zone marginale de la membrure circulaire (4) étant nettement supérieure à l'épaisseur de paroi de la zone de paroi restante de la calotte (3), et **caractérisé en ce que** la zone marginale de la calotte (3) a été retroussée en direction de l'extrémité arrière du fuselage d'aéronef.

2. **Fuselage d'aéronef** selon la revendication 1, **caractérisé en ce que** la zone marginale conçue sous la forme d'une membrure circulaire 4 a été rivetée avec un Doppler (6) consolidé dans la zone de raccordement de la membrure circulaire (4) de la structure de fuselage interne d'aéronef et qui entoure ladite structure en adhérant à sa forme, ainsi qu'avec la structure de fuselage interne (2).

3. **Membrure circulaire** selon la revendication 1, **caractérisée en ce que** la calotte (3), en ce compris sa zone marginale conçue sous la forme d'une membrure circulaire retroussée, est constituée d'un matériau composite renforcé par fibres d'orientations différentes, l'orientation des fibres étant symétrique, approximativement symétrique ou asymétrique.
